# EUROPÄISCHE PATENTSCHRIFT

(11) **EP 0 978 089 B1**
(45) Veröffentlichungstag und Bekanntmachung des Hinweises auf die Patenterteilung: **25.09.2002**
(21) Anmeldenummer: 97927128.5
(22) Anmeldetag: 04.06.1997
(51) Int. Cl.: G06K 9/62, G06K 9/52

(54) **VERFAHREN UND ANORDNUNG ZUR TRANSFORMATION EINER EINGANGSVARIABLEN**
PROCESS AND ARRANGEMENT FOR TRANSFORMING AN INPUT VARIABLE
PROCEDE ET DISPOSITIF POUR TRANSFORMER UNE VARIABLE D'ENTREE

(30) Priorität: 12.06.1996 DE 19623365
(43) Veröffentlichungstag der Anmeldung: 09.02.2000
(73) Patentinhaber: DaimlerChrysler AG, 70567 Stuttgart (DE)
(72) Erfinder: OBERLÄNDER, Matthias, D-89077 Ulm (DE)
(86) Internationale Anmeldenummer: EP9702896
(87) Internationale Veröffentlichungsnummer: WO97048070

(56) Entgegenhaltungen:
- EP-A- 0 080 266
- US-A- 3 597 731
- US-A- 4 254 399
- ELECTRONICS AND COMMUNICATIONS IN JAPAN, Bd. 59, Nr. 12, Dezember 1976, Seiten 64-72, XP000601741 YOSHIYUKI TAKEUCHI: "TWO-DIMENSIONAL FOURIER POWER SPECTRUM ANALYZER"
- EXPLORING TECHNOLOGY: TODAY AND TOMORROW, DALLAS, OCTOBER 25 - 29, 1987, Nr. 1987, 25.Oktober 1987, INSTITUTE OF ELECTRICAL AND ELECTRONICS ENGINEERS, Seiten 612-619, XP000012399 ERSOY O K ET AL: "NEW METHODS FOR REAL-TIME SIGNAL AND IMAGE RECOGNITION"

## Beschreibung

Die Erfindung betrifft eine Anordnung zur Transformation einer Eingangsvariablen.

In der US 4,120,043 ist eine Anordnung beschrieben, bei welcher eine diskret aufgebaute Anordnung zur Transformation einer Eingangsvariablen in eine Ausgangsvariable mittels einer programmierbaren Datenverarbeitungseinrichtung simuliert wird. Der Übergang von der fest verdrahteten Anordnung mit den logischen Schaltungsgruppen auf die Durchführung von logischen Operationen nach einem Rechenprogramm erhöht zwar die Verarbeitungszeit erheblich, ermöglicht aber den Einsatz der selben Anordnung für verschiedene wechselnder Anwendungsfälle.

Die US 4,163,21 1 zeigt eine logische Schaltungsanordnung zur Durchführung von als logische Baumstruktur darstellbaren Problemstellungen. Hierbei sind mehrere Ebenen mit jeweils gleich aufgebauten kaskadierten logischen Schaltkreisen nach Art einer Baumverzweigung mit Reduzierung der Datenbitbreite von Ebene zu Ebene zusammengeschaltet. Die Anordnung ist vor allem für die Realisierung rekursiver boole'scher Operationen geeignet.

Die Transformation von variablen Eingangssignalen ist eine in vielen Bereichen der digitalen Signalverarbeitung auftretende Aufgabe. Häufiges Ziel dabei ist die Extraktion des für eine gegebene Problemstellung relevanten Inhalts eines einen großen Variationsbereich umfassenden Eingangssignals, wobei möglichst wenig Information verloren gehen soll.

Beispielsweise ist bei der maschinellen Bildauswertung eine typische Problemstellung, für ein in Form binärer Bildpunktwerte eines Rasterbildes vorliegendendes Eingangssignal eine Aussage darüber abzuleiten, ob das untersuchte Bild oder ein Teil desselben einer bestimmten von ggf. auch mehreren vorgegebenen Objektklassen zugewiesen werden kann oder nicht. Häufig benutzt sind in diesem Zusammenhang beispielsweise die Hauptachsentransformation und die sogenannten neuronalen Netze. Diese bekannten Vorgehensweisen zeigen aber nur eine beschränkte Anpaßbarkeit an beliebige Abbildungen und wegen der erforderlichen hohen Rechenleistung auch nur einen geringen Datendurchsatz im Echtzeitbetrieb.

Der vorliegenden Erfindung liegt die Aufgabe zugrunde, eine Anordnung zur Transformation einer Eingangsvariablen mit hoher Anpaßbarkeit an a priori beliebige Abbildungen und hoher Verarbeitungsgeschwindigkeit anzugeben.

Erfindungsgemäße Lösungen dieser Aufgabe sind in den unabhängigen·Ansprüchen angegeben. Die Unteransprüche enthalten vorteilhafte Ausführungen und Weiterbildungen der Erfindung.

Die Erfindung ermöglicht ohne arithmetische Operationen im Prinzip die Realisierung beliebiger diskreter Transformationen- Dabei kann vorteilhafterweise die Dimension der Teil-Zuordnungsvorschriften gering gehalten werden. Die Transformation kann sowohl unter Einsatz eines programmierbaren Digitalrechners als auch mittels eines Netzwerks mit elektronischen Bausteinen in den Netzknoten und Verbindungsleitungen zwischen den Knoten vorgenommen werden. Der Einsatz eines Netzwerks ist wegen der sehr hohen erreichbaren Verarbeitungsgeschwingigkeit insbesondere für die Echtzeitverarbeitung digitaler Signale, beispielsweise bei der Bilderkennung vorteilhaft. Die als Netzknoten eingesetzten Bauteile sind vorzugsweise programmierbare Lesespeicher, insbesondere sogenannte EEPROMs.

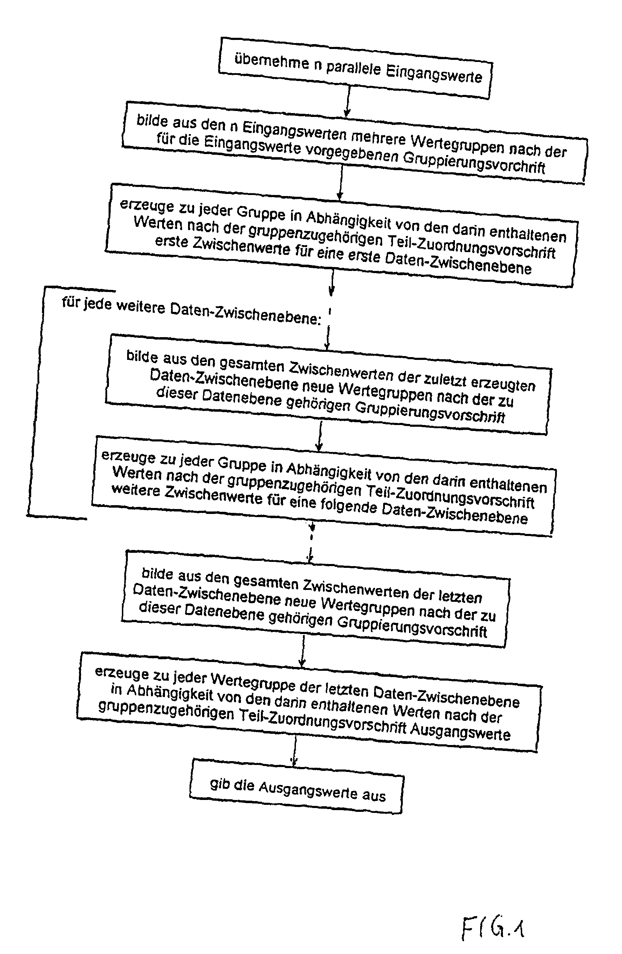

Die Erfindung ist nachfolgend anhand von Beispielen noch weiter veranschaulicht. Dabei zeigt
- FIG. 1: einen Ablaufplan des erfindungsgemäßen Verfahrens
- FIG. 2: einen Ausschnitt aus einem Netzwerk
- FIG. 3,4: weitere Beispiele von Netzwerkausschnitten
- FIG. 5: die Dimensionserweiterung an Netzwerkknoten
- FIG. 6,7: ein Beispiel für einen Netzwerknoten mit erweiterter Dimension
- FIG. 8: die Reduzierung eines Netzwerks.

Anhand des in FIG. 2 skizzierten Ablaufplans für das erfindungsgemäße Verfahren und dem in FIG. 2 skizzierten Netzwerkausschnitt sei das Prinzip der Erfindung erläutert.

Ausgegangen wird von einer Eingangsvariablen e mit n binärwertigen Eingangsstellen el bis en, die parallel auf die Netzwerkeingänge übernommen werden. Die Eingangsvariable sei beispielsweise die Binärdarstellung eines Schwarz-Weiß-Rasterbildes mit in Zeilen und Spalten angeordneten Rasterpunkten.

Innerhalb des Netzwerks seien mehrere Ebenen entsprechend der fortschreitenden Verarbeitung parallel anliegender Werte definiert, insbesondere eine Daten-Eingangsebene EE, eine erste Daten-Zwischenebene ZE1 und ggf. weitere DatenZwischenebenen ZE2,...ZEr und eine Daten-Ausgangsebene AE sowie mehrere Knotenebenen KE1, KE2,, ,KE(r+1) mit jeweils mehreren Netzknoten. Die Anzahl der binärwertigen Stellen sei als Dimension bezeichnet. Die verschiedenen Datenebenen können unterschiedliche Dimensionen aufweisen. Insbesondere kann die m-stellige Ausgangsvariable im Extremfall mit m=1 auch einstellig sein. Die die Stellen in Daten-Eingangsebene, Daten-Zwischenebene und Daten-Ausgangsebene belegenden Binärwerte sind im folgenden auch als Eingangswerte, Zwischenwerte und Ausgangswerte bezeichnet.

In der ersten Knotenebene KE1 sind mehrere Netzknoten K11, K12,... mit jeweils mehreren Ein- und Ausgängen angeordnet. Im skizzierten Beispiel der FIG. 2 ist die Anzahl der Eingänge jeweils gleich der Anzahl der Ausgänge. Die Anzahl der Ein- bzw. Ausgänge eines Knotens sei als dessen Dimension k bezeichnet. Die verschiedenen Knoten können unterschiedliche Dimensionen aufweisen. Die Eingangsstellen e1 bis en der Eingangsvariablen liegen jeweils einzeln an einem der Eingänge der Knoten, so daß durch die Dimension und Anordnung der Knoten eine Gruppierungsvorschrift für die Eingangsstellen vorgegeben ist.

Die Knoten enthalten jeweils eine Teil-Zuordnungsvorschrift, welche nach Maßgabe der Wertegruppe an den Eingängen des jeweiligen Knotens die Bereitstellung einer Gruppe binärer Werte an dessen Ausgängen als Zwischenwerte einer ersten Daten-Zwischenebene ZE1 bewirkt. Die Knoten sind vorzugsweise als programmierbare Lesespeicher, insbesondere EEPROMs, ausgeführt. Die Teil- Zuordnungsvorschrift liegt dann als Inhalt eines programmierbaren Speichers mit den durch die Eingänge des Knotens gebildeten Adressiereingängen vor.

Die Gesamtheit der an den Ausgängen aller Knoten K11, K12, ... der ersten Knotenebene KE1 erzeugten Zwischenwerte bildet die erste Daten-Zwischenebene ZE1. Ein Netzwerk wird zwar nicht notwendigerweise, aber üblicherweise mehr als eine Daten-Zwischenebene aufweisen. Eine zweiten Knotenebene KE2 weist wiederum mehrere Netzwerkknoten auf, deren Eingänge mit den Ausgängen der Knoten der vorhergehenden Knotenebene KE verbunden sind. Vorzugsweise sind die Verbindungsleitungen verzweigungsfrei und somit die Ausgangs-Eingangs-Zuordnungen eindeutig. Die Zuordnung bestimmter Ausgänge der ersten Knotenebene zu bestimmten Eingängen der zweiten Knotenebene sei als Gruppierungsvorschrift der Daten-Zwischenebene ZE2 bezeichnet und ist realisiert durch die Führung der Verbindungsleitungen im Verbindungsabschnitt V1. Die Anordnung der einzelnen Knoten der zweiten Knotenebene kann bei entsprechender Anpassung der in der Skizze in dem Verbindungsabschnitt V1 zusammengefaßten Verbindungsleitungen verändert werden. Die Gruppierungsvorschrift bleibt hiervon unberührt.

In der zweiten Knotenebene werden wiederum in jedem Knoten nach der zugehörigen Teil-Zuordnungsvorschrift in Abhängigkeit von den Zwischenwerten der an den Eingängen des jeweiligen Knotens anliegenden Zwischenwertegruppe weitere Zwischenwerte einer zweiten Daten-Zwischenebene ZE2 an den Ausgängen der Knoten der zweiten Knotenebene KE2 erzeugt.

Die Zwischenstellen der zweiten Daten-Zwischenebene ZE2 werden wiederum nach einer zu dieser Daten-Zwischenebene gehörigen Gruppierungsvorschrift neu gruppiert auf die Eingänge einer weiteren Knotenebene geführt.

Auf diese Weise können mehrere (r) Daten-Zwischenebenen jeweils durch Knotenebenen getrennt kaskadiert werden. Die Knoten der auf die letzte Zwischenebene ZEr folgenden Knotenebene KE(r+1) erzeugen schließlich an ihren Ausgängen die Binärwerte der Ausgangsstellen ol bis on des skizzierten Beispiels. Die Ausgangswerte werden zur weiteren Verarbeitung ausgegeben.

Die anhand des in FIG. 2 skizzierten Netzwerks beschriebenen Verarbeitungsschritte können auch äquivalent auf einem programmierbaren Digitalrechner ausgeführt werden. Insbesondere in einer Lernphase zur Ermittlung einer geeigneten Netzwerktopologie (Knotendimensionen, Knotenanordnungen, Verbindungsleitungen) nebst Teil-Zuordnungsvorschriften in den Knoten oder bei wechselnden Aufgabenstellungen kann die Ausführung des erfindungsgemäßen Verfahrens auf einem Digitalrechner vorteilhaft sein.

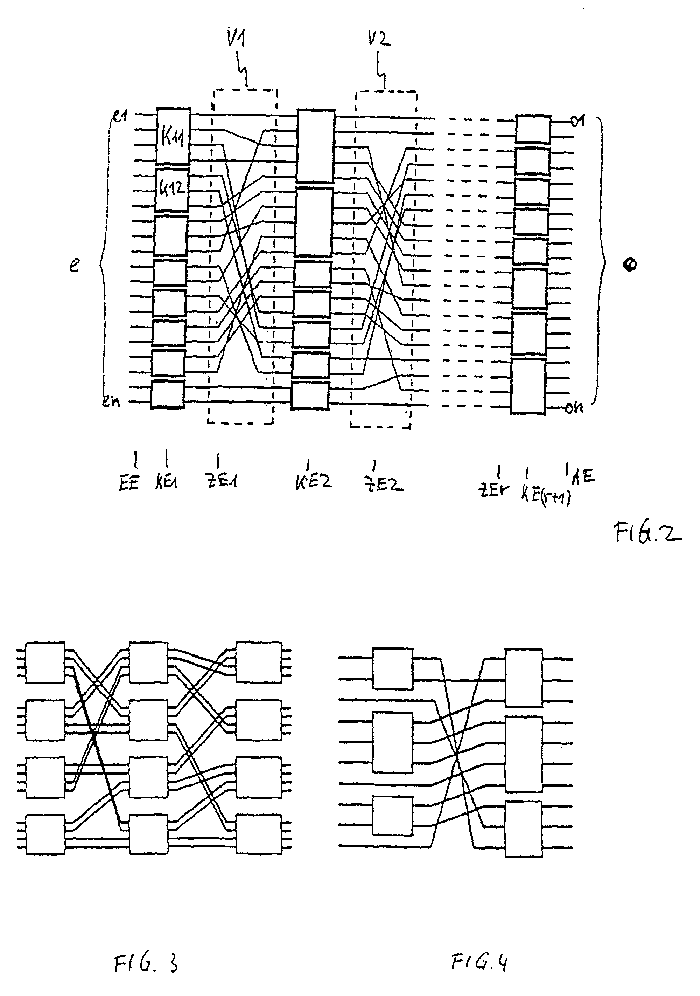

Bei dem in FIG. 2 skizzierten Netzwerk sind in verschiedenen Knotenebenen jeweils unterschiedliche Aufteilungen der Netzwerkdimension n auf die jeweils mehreren Knoten vorgesehen, um die hohe Flexibilität in der Gestaltung der Topologie bei der erfindungsgemäßen Vorrichtung zu verdeutlichen. Weitere Beispiele hierfür zeigen FIG. 3 mit einem Netzwerk mit durchgehend einheitlicher Knotendimension und paarweise geführten Verbindungsleitungen und die FIG. 4 mit durch eine Knotenebene unverändert durchgeführten Leitungen. Die durchgeführte Leitung kann als Grenzfall eines Knotens der Dimension Eins und einer identischen Zuordnung von Ausgangswert zu Eingangswert betrachtet werden.

Durch variable Gestaltung der Verbindungsleitungsabschnitte (V1, V2... in FIG. 2) zwischen zwei Knotenebenen, beispielsweise in Form schaltbarer Gatter, können die Netzwerke flexibler gestaltet werden, allerdings unter Inkaufnahme höheren Schaltungsaufwands und zusätzlicher Gatterlaufzeiten.

Die in FIG. 2 bis 4 skizzierten Netzwerke zeigen durchgehend die einheitliche Dimension n der Eingangsvariablen e. Damit sind noch keine beliebigen Transformationensvorschriften für die Abbildung der Eingangsvariablen auf die Ausgangsvariable realisierbar. Es läßt sich zeigen, daß durch die Erweiterung der Dimension des Netzwerks über die Dimension n der Eingangsvariablen e hinaus jede beliebige Transformationsvorschrift realisierbar ist. Eine Dimensionserweiterung wird erreicht, indem einer oder mehrere der Knoten eine höhere Anzahl von Ausgängen ka als Eingänge ke aufweist, d.h. die an den Knotenausgängen bereitgestellte Wertegruppe hat mehr Stellen als die an den Knoteneingängen anliegende Wertegruppe.

Vorzugsweise ist die maximale Anzahl von Eingängen eines Knotens nicht größer als kemax=12, insbesondere nicht größer als kemax=8, wogegen die Anzahl der binärwertigen Stellen der Eingangsvariablen typischerweise n=64 und mehr beträgt.

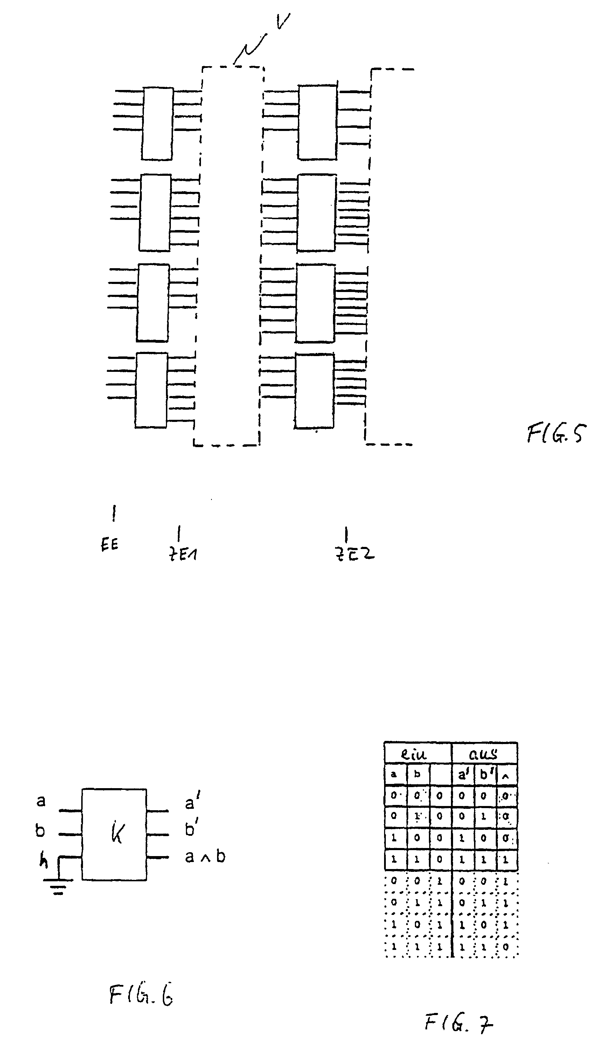

In FIG. 5 ist ein Netzwerkausschnitt mit zwei Knotenebenen mit jeweils vier Knoten skizziert, in welchem die Knoten teilweise mehr Ausgänge als Eingänge aufweisen. Die Knotendimension erhöht sich z.B. von ke=4 auf ka=6 oder von ke=6 auf ka=8. Die Dimension n=16 der Daten-Eingangsebene erhöht sich in der ersten Daten-Zwischenebene ZE1 auf nZ1= n+4=20 und in der zweiten Datenzwischenebene weiter auf nZ2=26. Der Verbindungsabschnitt V, der keine Verzweigungen enthalten soll, bewahrt die Dimension und bewirkt lediglich eine Umgruppierung der Zwischenstellen.

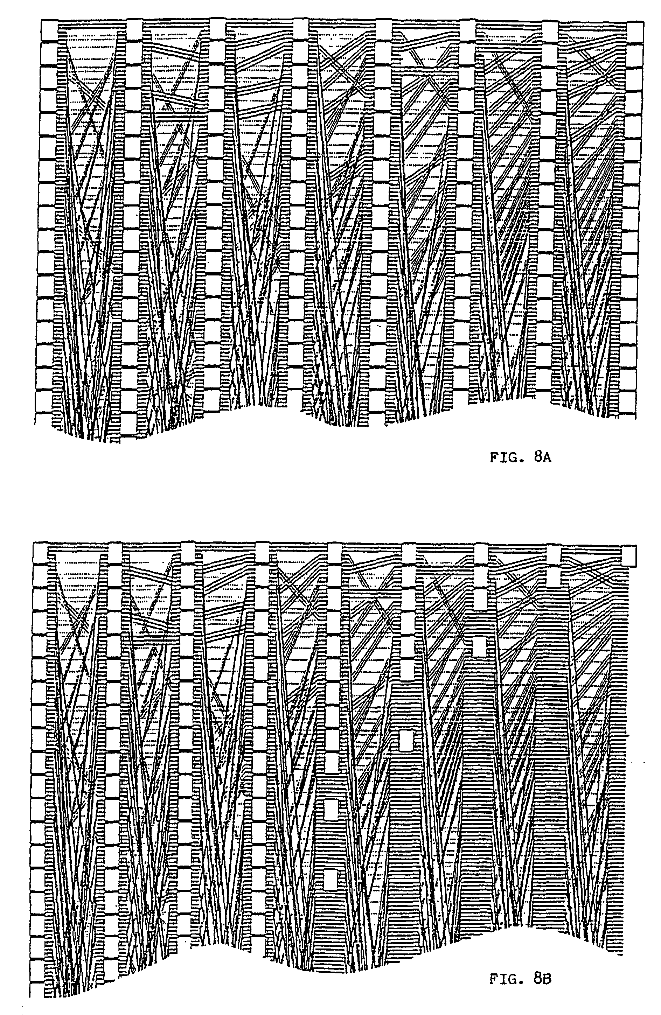

Die Bedeutung der Dimensionserweiterung ist an einem einfachen Beispiel unter Bezugnahme auf die FIG. 6 und FIG. 7 veranschaulicht. Gegeben sei eine Wertegruppe von zwei binären variablen Werten a und b. Ein Knoten K soll ohne Informationsverlust einen Funktionswert für die boollsche Funktion f = (aΛb) an einem seiner Ausgänge bereitstellen. Es zeigt sich, daß mit zwei Ausgängen des Knotens diese Forderung nicht zu erfüllen ist. Zwar ist leicht eine Zuordnungsvorschrift aufzustellen, die an einem von zwei Ausgängen den gewünschten Funktionswert erzeugt, der verbleibende andere Ausgang reicht aber nicht aus um den ursprünglichen Informationsumfang zu erhalten. Durch die Einführung eines dritten Ausgangs kann aber neben dem Funktionswert f auch der volle Informationsumfang vom Eingang zum Ausgang in Form der variablen Werte a' und b' weitergegeben werden, wobei sogar eine identische Abbildung von a, b auf a', b' möglich ist.

Mit dem Modell eines Hilfsbits h an einem zusätzlichen Eingang des Knoten k wie in FIG. 6 skizziert kann eine erweitere Wertetabelle nach FIG. 7 aufgestellt werden.

Eine Teil-Zuordnungsvorschrift im Knoten bedeutet eine Abbildung aller zulässigen Wertekombinationen an den Eingängen des Knotens auf Wertekombinationen an den Ausgängen des Knotens. Ein Informationsverlust wird dabei sicher vermieden wenn die Abbildung umkehrbar ist. Die Menge der erlaubten Abbildungen ist dann beschreibbar als die Menge aller Permutationen der Menge der zulässigen Wertekombinationen an den Eingängen des Knotens. Für eine Knotendimension k gibt es 2^{k}! verschiedene umkehrbare Abbildungen (Zuordnungsvorschriften). Eine solche Abbildung einer k-dimensionalen digitalen Variablen auf sich selbst kann auch als Hyperpermutation bezeichnet werden, im Unterschied zur Permutation, die lediglich eine Vertauschung von Stellen einer mehrstelligen Variablen beschreibt. Die Teil-Zuordnungsvorschriften in dem Knoten sind im Regelfall keine Permutationsvorschriften. Die Umkehrbarkeit ist keine notwendige Eigenschaft der Teil-Zuordnungsvorschrift.

Da das Hilfsbit in dem Modell keine Information beinhaltet, kann es willkürlich konstant angenommen werden, z.B. gleich Null gesetzt werden (angedeutet durch Masseverbindung am dritten Knoteneingang). Die Anzahl der möglichen Eingangszustände ist damit wieder lediglich durch die variablen Werte a und b bestimmt und für eine umkehrbare Abbildung reicht eine reduzierte Wertetabelle aus, die in FIG. 7 mit durchgezogenen Linien eingerahmt ist. Es läßt sich zeigen, daß durch Erweiterung der Knotendimension jede beliebige boolesche Funktion mit einer umkehrbaren Abbildung, d.h. ohne Informationsverlust darstellbar ist. Dies gilt sowohl für den einzelnen Knoten als auch für ein aus einer Mehrzahl von Knoten bestehendes Netzwerk. Der Umfang der Dimensionserweiterung, d.h. im Modell der FIG. 6 die Anzahl der Hilfsbits, ist abhängig von der Netzwerktopologie und der zu realisierenden Abbildung. Es läßt sich zeigen, daß eine beliebige Transformation einer Eingangsvariable der Dimension n durch ein Netzwerk der Dimension 2n mit Knoten der maximalen Dimension 3 realisierbar ist, bezogen auf das Modell der Hilfsbits also mit n Hilfsbits.
Auch eine Reduzierung der Netzwerkdimension von einer Datenebene zur nächsten ist möglich und zur Vereinfachung des Netzwerks bzw. einer auf anderem Wege erfolgenden Signalverarbeitung sinnvoll, wenn ein damit verbundener Verlust an Dateninhalt hinnehmbar ist. Die Reduzierung kann in einer oder mehreren Knotenebenen erfolgen.

Für den in der Mustererkennung häufigen Fall, daß ein Merkmalsvektor als Eingangsvariable mit hoher Bitzahl auf nur wenige Augangsbits zur Klassifikation abgebildet werden soll, bleiben bei einer Abbildung der n-dimensionalen Eingangsvariablen auf eine Ausgangsvariable gleicher oder größerer Dimensionen die meisten der Stellen in der Ausgangsvariablen unberücksichtigt für die weitere Verarbeitung.
Für solche und vergleichbare Anwendungsfälle können aus dem Netzwerk solche Verbindungen, Knoten und Knotenausgänge entfernt werden, die zu den Binärwerten in den weiter ausgewerteten Ausgangsstellen keinen oder keinen nennenswerten Beitrag leisten. Insbesondere anwendungsspezifische Netzwerke können dadurch wesentlich vereinfacht werden.

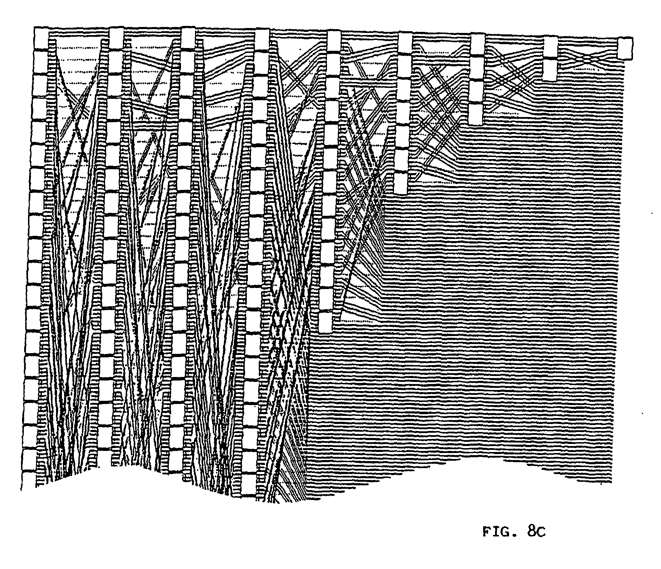

Als Beispiel ist in FIG. 8 ein Ausschnitt aus einem Netzwerk nach der vorliegenden Erfindung zur Erkennung einer Ziffer aus einem Rasterbild dargestellt. Zur Klassifizierung genügen vier Bit der Ausgangsvariablen die auf die Ausgänge des in der Skizze obersten Knotens der letzten Knotenebene geleitet werden können. Alle Knoten die keinen Einfluß auf diese vier Klassifikationsbits haben, können für die Aufgabe der Ziffernklassifikation weggelassen werden, was zu einem ausgedünnten Netzwerk nach FIG. 8B führt. Durch Umstellen der verbleibenden Knoten kann das ausgedünnte Netzwerk konzentrierter dargestellt werden wie in FIG. 8C.

Schließlich können die für die Klassifikation nicht benötigen Ausgangsstellen bereits ab den unmittelbar verbundenen Knoten entfallen, wodurch sich eine drastische Reduzierung der Dimension in den letzten Datenebenen ergibt.

## Patentansprüche

1. Anordnung zur Transformation einer n-stelligen Eingangsvariablen mit einer Mehrzahl binärwertiger Eingangsstellen in eine m-stellige Ausgangsvariable nach einer vorgebbaren Transformationsvorschrift in Form eines Netzwerks mit folgenden Merkmalen:
a) das Netzwerk weist mehrere aufeinanderfolgende Datenebenen mit einer oder mehreren Zwischenebenen zwischen der Datenebene der Eingangsstellen und der Datenebene der Ausgangsstellen auf
b) zwischen je zwei Datenebenen sind in Knotenebenen jeweils einer oder mehrere parallel betriebene Knoten mit Eingängen und Ausgängen angeordnet, wobei jeder Knoten aus einer an seinen Eingängen anliegenden Gruppe von binären Werten der vorausgehenden Datenebene nach einer knotenspezifischen Teil-Zuordnungsvorschrift an seinen Ausgängen binäre Werte für die nachfolgende Datenebene erzeugt
c) in der oder den Zwischenebenen bestehen Verbindungen zwischen Ausgängen vorangehender und Eingängen nachfolgender Knoten,
**dadurch gekennzeichnet, daß** die Knoten als adressierbare programmierbare Lesespeicher ausgeführt sind, deren Adressanschlüsse die Eingänge bilden.

2. Anordnung nach Anspruch 1, **dadurch gekennzeichnet, dass** einer oder mehrere der Knoten mehr Ausgänge als Eingänge aufweisen.

3. Anordnung nach Anspruch 1 oder 2, **dadurch gekennzeichnet, daß** die maximal auftretende Anzahl k von Eingängen eines Knotens wesentlich kleiner als die Dimension n der Eingangsvariablen, vorzugsweise nicht größer als k=12, insbesondere nicht größer als k=8 ist.

4. Anordnung nach einem der Ansprüche 1 bis 3, **dadurch gekennzeichnet, daß** in den Zwischenebenen die Verbindungen verzweigungsfrei sind.

5. Anordnung nach einem der Ansprüche 1 bis 4, **gekennzeichnet durch** die Verwendung in einem Mustererkennungssystem.

## Claims

1. Arrangement for transforming an n-digit input variable with a multiplicity of binary input places into an m-digit output variable in accordance with a predefinable transformation rule in the form of a network having the following features:
a) the network has a plurality of successive data planes with one or more intermediate planes between the data plane of the input places and the data plane of the output places,
b) between each two data planes there are in each case one or a plurality of nodes operated in parallel with inputs and outputs arranged in node planes, each node generating from a group of binary values of the preceding data plane which are present at its inputs binary values for the following data plane at its outputs in accordance with a node-specific component-assignment rule,
c) in the intermediate plane or planes there are links between outputs of preceding nodes and inputs of subsequent nodes, **characterized in that** the nodes are embodied as addressable programmable read-only memories whose address terminals form the inputs.

2. Arrangement according to Claim 1, **characterized in that** one or more of the nodes have more outputs than inputs.

3. Arrangement according to Claim 1 or 2, **characterized in that** the maximum occurring number k of inputs of a node is significantly smaller than the dimension n of the input variable, preferably not greater than k=12, in particular not greater than k=8.

4. Arrangement according to one of Claims 1 to 3, **characterized in that** the links in the intermediate planes are branch-free.

5. Arrangement according to one of Claims 1 to 4, **characterized by** the use in a pattern-detection system.

## Revendications

1. Arrangement pour transformer une variable d'entrée de n caractères comprenant une pluralité de caractères d'entrée à valeur binaire en une variable de sortie de m caractères d'après une règle de transformation pouvant être prédéfinie sous la forme d'un réseau ayant les caractéristiques suivantes :
a) le réseau présente plusieurs plans de données successifs avec un ou plusieurs plans intermédiaires entre le plan de données des caractères d'entrée et le plan de données des caractères de sortie,
b) un ou plusieurs noeuds fonctionnant en parallèle et comportant des entrées et des sorties sont à chaque fois disposés dans des plans de noeuds entre deux plans de données respectifs, chaque noeud produisant à ses sorties des valeurs binaires pour le plan de données suivant à partir d'un groupe de valeurs binaires du plan de données précédent appliqué à l'une de ses entrées d'après une règle d'affectation partielle spécifique au noeud,
c) il existe des liaisons entre les sorties des noeuds précédents et les entrées des noeuds suivants dans le ou les plans intermédiaires,
**caractérisé en ce que** les noeuds sont réalisés sous la forme de mémoires de lecture programmables adressables dont les bornes d'adresse forment les entrées.

2. Arrangement selon la revendication 1, **caractérisé en ce qu'**un ou plusieurs noeuds présentent plus de sorties que d'entrées.

3. Arrangement selon la revendication 1 ou 2, **caractérisé en ce que** le nombre maximum k d'entrées pouvant être présentes sur un noeud est nettement inférieur à la dimension n des variables d'entrée, de préférence non supérieur à k = 12, en particulier non supérieur à k = 8.

4. Arrangement selon l'une des revendications .1 à 3, **caractérisé en ce que** les liaisons dans les plans intermédiaires sont sans bifurcations.

5. Arrangement selon l'une des revendications 1 à 4, **caractérisé par** l'utilisation dans un système de reconnaissance de modèle.
